# EUROPEAN PATENT SPECIFICATION

(11) **EP 1 537 774 B1**
(45) Date of publication and mention of the grant of the patent: **30.05.2007**
(21) Application number: 04078060.3
(22) Date of filing: 09.11.2004
(51) Int. Cl.: A01J 5/017, G01B 11/00

(54) **A device for milking animals**
Vorrichtung zum Melken von Tieren
Dispositif de traite des animaux

(30) Priority: 03.12.2003 NL 1024935
(43) Date of publication of application: 08.06.2005
(73) Proprietor: Lely Enterprises AG, 6300 ZUG (CH)
(72) Inventor: Kortekaas, Martinus Petrus, 2161 XJ Lisse (NL)
(74) Representative: Corten, Maurice Jean F.M.

(56) References cited:
- EP-A- 0 360 354
- WO-A-99/09430
- PATENT ABSTRACTS OF JAPAN vol. 013, no. 422 (P-933), 20 September 1989 (1989-09-20) -& JP 01 153908 A (NIPPON SHEET GLASS CO LTD), 16 June 1989 (1989-06-16)

## Description

The invention relates to a milking device for milking animals according to the preamble of claim 1.

Such a milking device is known from PCT-application WO-99/009430.

This document discloses a milking device provided with a robot arm for automatically connecting teat cups. The arm comprises a teat position meter for determining the positions of the teats. This teat position meter comprises two emitters for emitting different types of radiation. To the lower side of each emitter there is fastened a detector for receiving the reflected radiation from the relevant emitter.

The invention aims at providing a milking device that determines the teat positions in an alternative manner.

This is achieved by means of a milking device as mentioned above, characterized in that the detector is suitable for detecting whether the first and the second detection beam coincide on the teat.

By emitter is also meant, besides a radiation source, the combination of a radiation source and a diffraction element, such as a lens, a mirror or a prism.

Owing to the fact that the device is capable of detecting whether the first and the second detection beam coincide on the teat, it is possible to determine, by using simple trigonometric mathematical rules, the position of the teat on the basis of the position of the emitter and the direction from which the detection beams are emitted. An additional advantage is that only a single detector will suffice. By using a broad detection beam from, for example, the first emitter, first a rough determination of the detection area can take place, after which a narrow beam from the second emitter defines therein a small area in which overlap takes place.

In a preferred embodiment, at least the first emitter is movable for the purpose of emitting detection beams from different positions and/or in different directions and the emitter is capable of being controlled by the detection signal. It is thus possible, if the beams do not coincide on the teat, to emit the detection beams in such a way that they coincide on the teat.

In a further embodiment, the sensitivity of the detector to the radiation is adjustable. This inventive aspect makes it possible to increase or decrease alternately the sensitivity to a specific, emitted beam, so that a specific radiation can be excluded from detection. If the alternation of the sensitivity takes place sufficiently fast, a change in position, if any, of the object has no effect.

The emitter comprises in particular a laser. Laser light has the favourable property of not diverging. Besides, electromagnetic radiation, such as that from a laser, can be directed easily by means of mirrors, lenses, prisms and the like.

In a specific embodiment, the milking robot comprises an arm for connecting the teat cups, which arm comprises a detector. Owing to the fact that the arm is suitable for being active in a large area under the animal to be milked, it is possible to detect by means of the arm in a simple manner, from many positions, a reflected detection beam, without a separate construction being required for the purpose.

The invention will now be explained in further detail with reference to an embodiment shown in the drawings, in which:
Figure 1 is a plan view of a milking device according to the invention;
Figure 2 is a side view of the milking device, and
Figure 3 is a perspective diagram of the detection of a teat by means of two emitters and a detector.

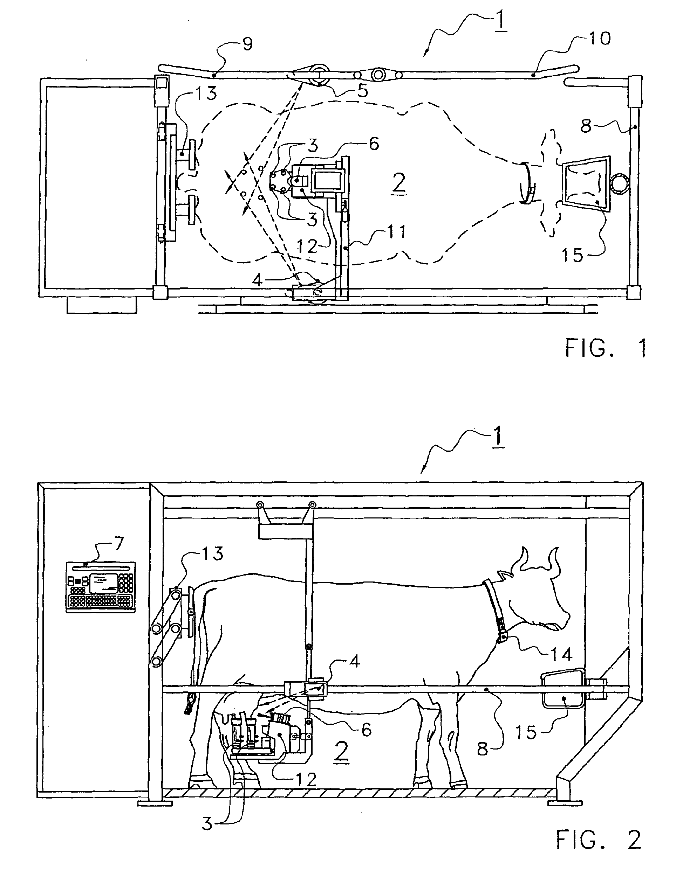

Figure 1 is a plan view of a milking device 1 for milking animals comprising a milking robot 2 for automatically connecting teat cups 3 to the teats of the animal to be milked and comprising a teat position meter, which teat position meter is provided with a first emitter 4 and a second emitter 5 for emitting simultaneously a first detection beam, respectively a second detection beam, with a detector 6 for receiving a detection beam reflected by a teat and supplying a detection signal, and with a computer 7 for determining the teat position on the basis of the detection signal, characterized in that the detector 6 is suitable for detecting whether the first and the second detection beam coincide on the teat.

Figure 2 shows the device 1 in a side view, the reference numerals of the two figures corresponding to each other. The device is depicted as a box 8 in which a cow is located. An entrance door 9 and an exit door 10 are arranged at a longitudinal side. There is provided a feed trough 15 for supplying feed in the robot 2. The milking robot 2 comprises an arm 11 for connecting the teat cups 3. The arm 11 comprises an end portion 12 to which four teat cups 3 are fastened. By means of the arm 11 the end portion 12 is capable of being moved from outside the box 8 to under the animal. In order to be able to follow movements of the cow in the longitudinal direction of the box 8, there is disposed a so-called rear-follower 13. The latter always pushes against the rear side of the cow and is coupled to the arm 11, so that longitudinal movements of the animal will immediately result in a longitudinal movement of the arm 11. There is provided a computer 7 (Figure 2) for controlling the box 8, determining the teat position and controlling the milking process.

The aforementioned first emitter 4, respectively second emitter 5, are fastened to the two lateral sides. The two emitters 4, 5 are movable so as to emit detection beams from different positions and/or in different directions and the emitters 4, 5 are capable of being controlled by the detection signal. Each of the emitters 4, 5 is designed as a laser, but may also be of an other type, such as an ultrasonic transmitter. An ultrasonic way of operating has the advantage of being less sensitive to contamination. The arm 11 further comprises a detector 6 for detecting the detection beams reflected by the teat. Said detector 6 is fastened to the upper side of the end portion 12.

The first emitter 4 is suitable for emitting radiation of an other type than that of the second emitter 5, the detector 6 being suitable for distinguishing the two types. The two emitters emit laser light of different colours and consequently differ in frequency. However, they are also capable of emitting radiation that differs in an other wave characteristic, such as modulation, polarisation direction or phase. The two emitters 4, 5 are connected to the frame so as to be pivotable about a horizontal and a vertical axis, but, in a non-shown embodiment, it is also possible for them to change position by means of, for example, a rail. It is also possible for them to be fastened to the end portion 12 of the arm 11. This has the advantage that they can be positioned closer to the teats. Besides, for a greater accuracy, it is possible to use more than two emitters or a plurality of detectors. In the embodiment described, the direction of the beam is changed by pivoting the radiation source itself about a vertical or a horizontal axis. In a non-shown embodiment, the beams emitted by the source are guided in a particular direction by mirrors or prisms. This has the advantage that only a relatively small element needs to be moved.

The device operates as follows. A cow reports at the device 1 and is recognised in a known manner by means of a transponder 14 around her neck and a non-shown identification device. The computer 7 determines whether the animal is allowed to be milked, opens the entrance door 9 and supplies a particular amount of feed. The arm 11 with the end portion 12 is subsequently moved to under the animal. The two emitters 4, 5 emit radiation in an initial direction, the first emitter 4 emitting red light, the second emitter 5 emitting green light. The two initial directions have a vertical and a horizontal component corresponding to the angles the two beams form relative to the horizontal plane and the angles the two beams form relative to the vertical transverse plane. The vertical and the horizontal component of the initial angle are previously recorded in the memory of the computer 7 and may differ per cow. In this manner the shape of the cow, and specifically the shape of the udder, is taken into account.

The detector 6 is directed in the direction of the udder. In the case that no detection radiation from the two emitters 4, 5 is detected, the two emitters 4, 5 are moved according to a predetermined pattern, the so-called scanning movement, until the detector 6 detects detection radiation from one of the two emitters 4, 5, for example the green one. The red emitter 4 subsequently performs a scanning movement along the imaginary line in which the green detection beam is active, until the detector 6 also detects red light, i.e. as far as the point where the two detection beams coincide.

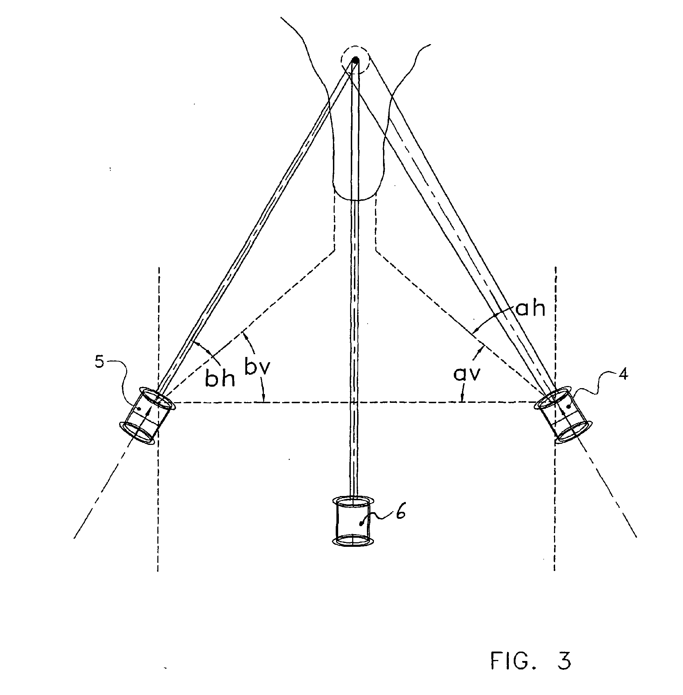

This situation is shown diagrammatically in Figure 3. It is pointed out that the beam of the first emitter 4 differs in shape from that of the second emitter 5 and is broader.

The computer 7 now calculates, by means of simple trigonometric calculations, the exact spatial teat position of the relevant teat, on the basis of the fixed spatial positions of the two emitters 4, 5, the angles (αH en βH) the two beams form relative to the horizontal plane and the angles (αV en βV) the two beams form relative to the vertical transverse plane.

The arm 11 subsequently moves the relevant teat cup 3 to this teat position. During the movement to under this teat, the two beams remain in contact with the teat, so that the teat position is each time adapted to possible changes in the position assumed by the cow. The teat cup 3 is subsequently moved upwards by the arm 11 and the connection has been completed. The milking process is started immediately thereafter. The determination of the positions of the other teats and the subsequent connection take place analogously.

When the milking process has been finished, the teat cups 3 are disconnected in a known manner and the exit door 10 is opened to enable the animal to leave the device.

In the embodiment shown, the detector 6 is rigidly fastened to the end portion 12. However, said detector may also be fastened to the frame or in the bottom. In order to be able to assume an even better position, it is also possible for the detector 6 to be fastened movably to the end portion 12.

The milking device 1 described in the exemplary embodiment comprises a robot arm 11 to which four teat cups 3 are fastened. However, the invention is not limited to such an arm 11 and may also relate, for example, to a gripper type of arm. In the latter case, the teat cups 3 are not permanently connected to the arm 11, but the arm 11 is designed as a gripper that is capable of connecting or disconnecting the teat cups 3.

## Claims

1. A milking device (1) for milking animals comprising a milking robot (2) for automatically connecting teat cups (3) to the teats of the animal to be milked and comprising a teat position meter, which teat position meter is provided with a first and a second emitter (4,5) for emitting simultaneously a first detection beam, respectively a second detection beam, with a detector (6) for receiving a detection beam reflected by a teat and supplying a detection signal, and with a computer (7) for determining the teat position on the basis of the detection signal, the first emitter (4) being suitable for emitting radiation of an other type than that of the second emitter (5) and the detector (6) being suitable for distinguishing the two types, **characterized in that** the detector (6) is suitable for detecting whether the first and the second detection beam coincide on the teat, whereby the type of radiation differs in the shape of the beam.

2. A milking device(1) as claimed in claim 1, **characterized in that** at least the first emitter (4) is movable for the purpose of emitting detection beams from different positions and/or in different directions, and **in that** the emitter (4) is capable of being controlled by the detection signal.

3. A milking device (1) as claimed in claim 1 or 2, **characterized in that** the types of radiation differ in a wave characteristic, such as frequency, modulation or polarisation direction.

4. A milking device (1) as claimed in any one of the preceding claims, **characterized in that** the sensitivity of the detector (6) to the radiation is adjustable.

5. A milking device (1) as claimed in any one of the preceding claims, **characterized in that** the emitter comprises a laser.

6. A milking device (1) as claimed in any one of the preceding claims, **characterized in that** the milking robot (2) comprises an arm (11) for connecting the teat cups (3), which arm (11) comprises the detector (6)

## Patentansprüche

1. Melkvorrichtung (1) zum Melken von Tieren mit einem Melkroboter (2) zum automatischen Anschließen von Zitzenbechern (3) an die Zitzen des zu melkenden Tieres und mit einem Zitzenpositionsmesser, wobei der Zitzenpositionsmesser versehen ist mit einem ersten und einem zweiten Strahler (4, 5) zum gleichzeitigen Aussenden eines ersten Detektionsstrahls bzw. eines zweiten Detektionsstrahls, mit einem Detektor (6) zum Empfangen eines von einer Zitze reflektierten Detektionsstrahls und zum Ausgeben eines Detektionssignals sowie mit einem Computer (7) zum Ermitteln der Zitzenposition auf der Basis des Detektionssignals, wobei der erste Strahler (4) geeignet ist, Strahlung von anderer Art als der zweite Strahler (5) auszusenden, und der Detektor (6) geeignet ist, die beiden Strahlungsarten zu unterscheiden,
**dadurch gekennzeichnet, daß** der Detektor (6) detektieren kann, ob der erste und der zweite Detektionsstrahl auf der Zitze zusammentreffen, wobei die Art der Strahlung in der Form des Strahls unterschiedlich ist.

2. Melkvorrichtung (1) nach Anspruch 1,
**dadurch gekennzeichnet, daß** zumindest der erste Strahler (4) beweglich ist, um Detektionsstrahlen von unterschiedlichen Positionen und/oder in unterschiedliche Richtungen auszusenden, und daß der Strahler (4) durch das Detektionssignal gesteuert werden kann.

3. Melkvorrichtung (1) nach Anspruch 1 oder 2,
**dadurch gekennzeichnet, daß** sich die Strahlungsarten in einer Wellencharakteristik, wie z. B. Frequenz, Modulation oder Polarisationsrichtung, unterscheiden.

4. Melkvorrichtung (1) nach einem der vorhergehenden Ansprüche,
**dadurch gekennzeichnet, daß** die Empfindlichkeit des Detektors (6) für die Strahlung einstellbar ist.

5. Melkvorrichtung (1) nach einem der vorhergehenden Ansprüche,
**dadurch gekennzeichnet, daß** der Strahler einen Laser umfaßt.

6. Melkvorrichtung (1) nach einem der vorhergehenden Ansprüche,
**dadurch gekennzeichnet, daß** der Melkroboter (2) einen Arm (11) zum Anschließen der Zitzenbecher (3) umfaßt, wobei der Arm (11) den Detektor (6) umfaßt.

## Revendications

1. Dispositif de traite (1) pour traire des animaux comprenant une trayeuse (2) permettant de connecter de manière automatique des gobelets trayeurs (3) aux trayons des animaux devant être traits et comprenant un appareil permettant de définir la position du trayon, ledit appareil étant muni d'un premier et d'un second émetteurs (4,5) pour émettre simultanément un premier faisceau de détection, respectivement un second faisceau de détection, d'un détecteur (6) pour recevoir un faisceau de détection réfléchi par un trayon et fournir un signal de détection, et d'un ordinateur (7) pour déterminer la position du trayon sur la base du signal de détection, le premier émetteur (4) étant approprié pour émettre une radiation d'un autre type que celle du second émetteur (5) et le détecteur (6) étant approprié pour distinguer les deux types, **caractérisé en ce que** le détecteur (6) est approprié pour détecter si le premier et le second faisceaux de détection coïncident avec le trayon, de sorte que le type de radiation diffère selon la forme du faisceau.

2. Dispositif de traite (1) selon la revendication 1, **caractérisé en ce que** au moins le premier émetteur (4) est mobile de façon à émettre des faisceaux de détection depuis des positions différentes et/ou dans des directions différentes, et **en ce que** l'émetteur(4) est capable d'être contrôlé par le signal de détection.

3. Dispositif de traite (1) selon la revendication 1 ou 2, **caractérisé en ce que** les types de radiation diffèrent par des caractéristique d'ondes, telle que la fréquence, modulation ou direction de polarisation.

4. Dispositif de traite (1) selon l'une quelconque des revendications 1 à 3, **caractérisé en ce que** la sensibilité du détecteur (6) à la radiation est ajustable.

5. Dispositif de traite (1) selon l'une quelconque des revendications 1 à 4, **caractérisé en ce que** l'émetteur comprend un laser.

6. Dispositif de traite (1) selon l'une quelconque des revendications 1 à 5, **caractérisé en ce que** la trayeuse (2) comprend un bras (11) pour connecter les gobelets trayeurs (3), ledit bras (11) comprenant le détecteur (6).
